# FASCICULE DE BREVET EUROPEEN

(11) **EP 1 431 177 B1**
(45) Date de publication et mention de la délivrance du brevet: **26.10.2005**
(21) Numéro de dépôt: 03028400.4
(22) Date de dépôt: 11.12.2003
(51) Int. Cl.: B64C 27/605

(54) **Dispositif à plateaux cycliques de commande du pas des pales d'un rotor de giravion**
Taumelscheibe für die Blattwinkelverstellung in einem Rotor eines Drehflüglers
Swashplate for controlling blade pitch of a rotor of a rotorcraft

(30) Priorité: 13.12.2002 FR 0215824
(43) Date de publication de la demande: 23.06.2004
(73) Titulaire: EUROCOPTER, 13725 Marignane (FR)
(72) Inventeur: Scala, Vincent, 13680 Lancon de Provence (FR)
(74) Mandataire: Renaud-Goud, Thierry

(56) Documents cités:
- DE-A- 3 620 794
- US-A- 4 630 998
- US-A- 5 785 497
- US-A- 6 033 182

## Description

L'invention concerne les dispositifs à plateaux 5 cycliques de commande du pas des pales d'un rotor de giravion, ou aéronef à voilure tournante. Le document US-A-4 630 998 montre un dispositif à plateaux cycliques selon le préambule de la revendication 1.

Dans le domaine technique des aéronefs à voilure tournante, il est connu qu'un dispositif à plateaux cycliques est un dispositif spécifique, qui permet de transmettre les mouvements des commandes de vol, placées en repère fixe par rapport à l'aéronef, vers les pales, placées en repère tournant, avec l'arbre du rotor, autour de l'axe de rotation de ce dernier.

L'invention se rapporte plus précisément à un dispositif à plateaux cycliques, pour commander le pas des pales d'un rotor, en particulier d'un rotor principal d'hélicoptère, le rotor étant du type schématiquement représenté sur la figure I, et pour lequel chaque pale 2 est, d'une part, entraînée en rotation autour d'un axe de rotation Z-Z d'un arbre 3 du rotor I, ou axe Z-Z du rotor I, par l'intermédiaire d'un moyeu 4 solidaire en rotation de l'arbre 3, et, d'autre part, solidaire en rotation, autour d'un axe longitudinal de changement de pas A-A de la pale 2, d'au moins un levier de pas 5 commandé par une bielle de pas 6 correspondante.

A titre d'exemple, sur le rotor I de la figure I, chaque levier de pas 5 est en saillie du côté du bord d'attaque de la pale 2 correspondante, sur un manchon 7 de liaison de cette pale 2 au moyeu 4, manchon 7 dont la pale 2 est solidaire en rotation autour de l'axe de pas A-A par son pied, lié au manchon 7 par deux broches 8, le manchon 7 étant lui-même articulé au moyeu 4 en pas, battement et traînée, par un mécanisme d'articulation autour de trois axes concourants et perpendiculaires deux à deux représenté dans son ensemble en 9.

L'invention se rapporte plus précisément à un dispositif de commande du pas du type comprenant un ensemble de plateaux cycliques 10 comprenant deux plateaux annulaires et coaxiaux, entourant l'axe Z-Z du rotor I, et montés sur un mécanisme II de guidage en translation axiale (parallèlement à l'axe Z-Z du rotor I pour la commande du pas collectif des pales 2) et en basculement (incliné dans toute direction autour de l'axe Z-Z du rotor I pour la commande du pas cyclique des pales 2) des plateaux par rapport à l'axe Z-Z du rotor I, et dont l'un est un plateau tournant 12 relié, d'une part, au moyeu 4 et/ou à l'arbre 3 par au moins un organe d'entraînement 13 du plateau tournant 12 en rotation avec le rotor I, autour de l'axe Z-Z de ce dernier, et, d'autre part, à chaque pale 2 par la bielle de pas 6 correspondante, ce plateau tournant 12 étant monté en rotation par au moins un roulement, à corps roulants généralement constitués d'une ou deux rangées de billes, sur l'autre plateau, qui est un plateau non tournant 14 lui-même relié, d'une part, à la structure 15 de l'aéronef par au moins un organe de retenue 16, immobilisant le plateau non tournant 14 en rotation autour de l'axe Z-Z du rotor I, et, d'autre part, à des organes de commande pilote 17, qui sollicitent le plateau non tournant 14 de sorte que les mouvements de translation axiale et/ou de basculement imposés au plateau non tournant 14 à partir des commandes pilotes sont suivis par le plateau tournant 12, qui transmet le pas à donner aux pales 2 du rotor I par l'intermédiaire des bielles de pas 6.

Généralement, les deux plateaux 12 et 14 entourent l'arbre 3, et les organes de commande pilotes 17 sont trois actionneurs de servocommande (vérins linéaires) ou actionneurs analogues disposés entre le plateau non tournant 14 et la structure 15 du giravion, et articulés chacun par des rotules à leurs extrémités inférieure et supérieure respectivement sur cette structure 15 et dans une chape respective du plateau non tournant 14, tandis que les bielles de pas 6 s'étendent entre le plateau tournant 12 et les leviers de pas 5 des pales 2 du rotor I, et sont articulées par des rotules à leurs extrémités supérieure et inférieure respectivement sur les leviers de pas 5 et dans des chapes réparties à la périphérie du plateau tournant 12.

Le plus souvent, le mécanisme II de guidage en translation axiale et en basculement des plateaux cycliques 12 et 14 comprend une rotule centrale 18, centrée sur l'axe Z-Z du rotor I, et sur laquelle l'un des plateaux, en général le plateau non tournant 14, et donc aussi le plateau tournant 12 lié au plateau 14 par le roulement, sont montés oscillants, par au moins un patin 19 à portée concave en calotte sphérique coopérant avec la rotule 18, laquelle est montée coulissante axialement (parallèlement à l'axe Z-Z du rotor I) autour d'un guide cylindrique 20 coaxial à l'axe Z-Z et non tournant autour de cet axe du rotor I, et généralement fixe par rapport à la structure 15 du giravion Lorsque les plateaux cycliques 12 et 14 entourent l'arbre 3, ce qui est le plus souvent le cas, le guide cylindrique 20 est tubulaire, entoure l'arbre 3, et est fixé à un carter solidaire de la structure 15 du giravion et entourant la liaison de la base de l'arbre 3 à la boîte de transmission principale, qui entraîne l'arbre 3, et donc le rotor I, en rotation autour de l'axe Z-Z.

Le plus souvent également, le ou les organes d'entraînement 13 du plateau tournant 12 en rotation et/ou le ou les organes de retenue 16, empêchant la rotation du plateau non tournant 14, est ou sont un ou des compas respectivement tournants ou non tournants, à deux bras articulés en ciseaux et connectés entre eux par un pivot ou une charnière, qui permet aux deux bras de chaque compas de s'écarter ou de se rapprocher l'un de l'autre pour autoriser les déplacements des plateaux 12 et 14 dans la direction de l'axe Z-Z du rotor I, puisque les bras supérieur et inférieur de chaque compas tournant 13 sont par ailleurs articulés respectivement sur l'arbre 3 ou le moyeu 4 du rotor I et sur le plateau tournant 12, et que les bras inférieur et supérieur de chaque compas non tournant 16 sont par ailleurs articulés sur la structure 15 du giravion et sur le plateau non tournant 14.

Mais, pour remédier à certains inconvénients propres à l'emploi de compas tournants et/ou non tournants, il a déjà été proposé d'équiper des dispositifs à plateaux cycliques avec des organes d'entraînement et/ou de retenue ayant une autre structure, par exemple un doigt tournant ou non tournant, en saillie radiale vers l'extérieur sur le plateau respectivement tournant ou non tournant et engagé dans une rampe elle-même tournante avec le rotor, ou au contraire non tournante et liée à la structure du giravion, comme décrit respectivement dans les brevets US-6,280,141 et US-09/154,655, ou encore d'utiliser un mécanisme de guidage en translation et en basculement des plateaux cycliques 12 et 14 qui soit d'une structure différente de celle comportant une rotule centrale 18 telle que décrite ci-dessus, et qui comprend deux colonnes de guidage, parallèles à l'axe du rotor et symétriques l'une de l'autre de part et d'autre de cet axe dans un même plan diamétral passant par cet axe du rotor, dans un mécanisme qui comprend également une liaison à joint de cardan, avec un anneau de cardan intermédiaire monté coulissant axialement sur les colonnes, et articulé à pivotement sur ces colonnes autour d'un premier axe diamétral de l'anneau, qui est un axe restant perpendiculaire à l'axe Z-Z du rotor I, tandis que l'anneau de cardan est également articulé à pivotement sur l'un des plateaux cycliques 12 et 14 autour d'un second axe diamétral de l'anneau de cardan, qui est perpendiculaire au premier axe diamétral, comme proposé par DE-A-36 03 400 et DE-A-36 20 794, ainsi que dans US-6,280,141 et US-09/154,655 précités. Ainsi, les déplacements axiaux des plateaux cycliques 12 et 14 et de l'anneau de cardan sont guidés par les deux colonnes, tandis que les basculements des plateaux cycliques 12 et 14 dans toute direction autour de l'axe Z-Z du rotor I sont obtenus par pivotement des plateaux cycliques 12 et 14 par rapport à l'anneau de cardan autour de l'un de deux axes diamétraux et perpendiculaires dudit anneau, et par pivotement de l'anneau sur les colonnes autour de l'autre de ces deux axes diamétraux perpendiculaires.

Les colonnes de guidage peuvent être tournantes (solidaires en rotation du rotor), et donc aussi l'anneau de cardan, monté dans ce cas entre les colonnes tournantes, d'une part, et, d'autre part, le plateau tournant ainsi entraîné en rotation par les colonnes et l'anneau qui remplacent le ou les compas tournants (voir US-09/154,655). Mais les colonnes de guidage peuvent également être non-tournantes, c'est-à-dire retenues contre toute rotation autour de l'axe Z-Z du rotor I, par un support fixé à la structure du giravion, auquel cas l'anneau de cardan est également non tournant et monté entre, d'une part, les colonnes non-tournantes, et, d'autre part, le plateau non tournant, ainsi retenu en rotation par les colonnes non-tournantes et l'anneau de cardan non tournant, qui remplacent le ou les compas non tournants (voir US-6,280,141).

Il est à noter que l'utilisation de colonnes de guidage tournantes ou non-tournantes n'empêche pas l'utilisation simultanée d'un ou de plusieurs compas respectivement non tournants ou tournants, car un dispositif comportant à la fois des colonnes non-tournantes et des colonnes tournantes est à exclure, dans la mesure où il ne permet pas tous les basculements exigés par les commandes de pas cycliques et assurés par l'anneau de cardan.

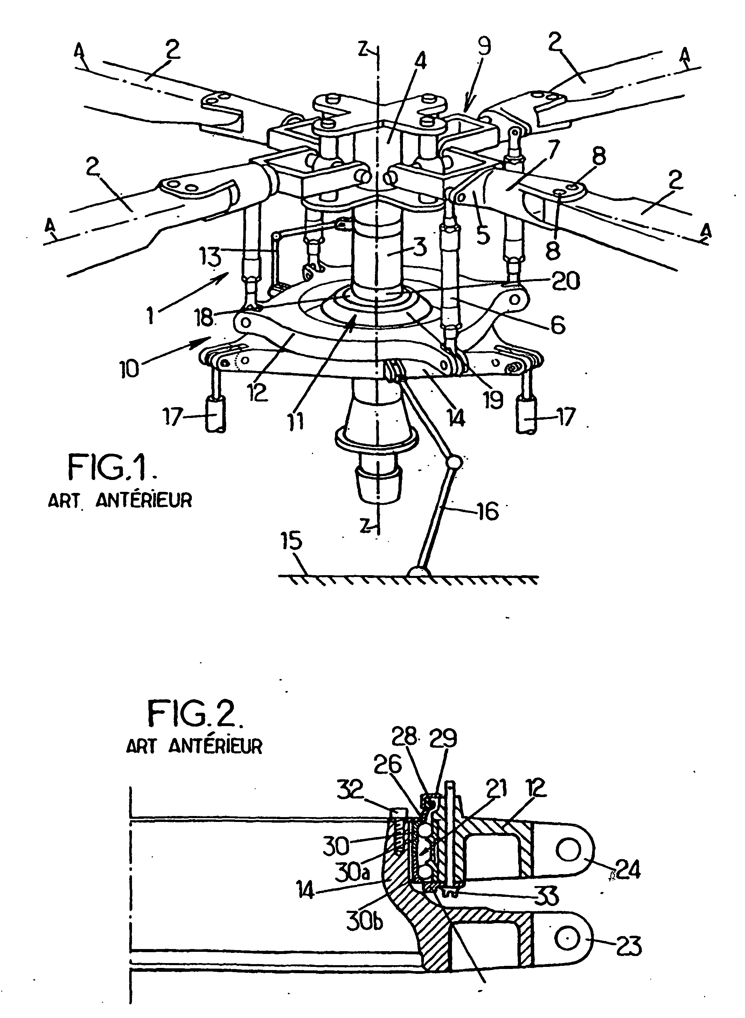

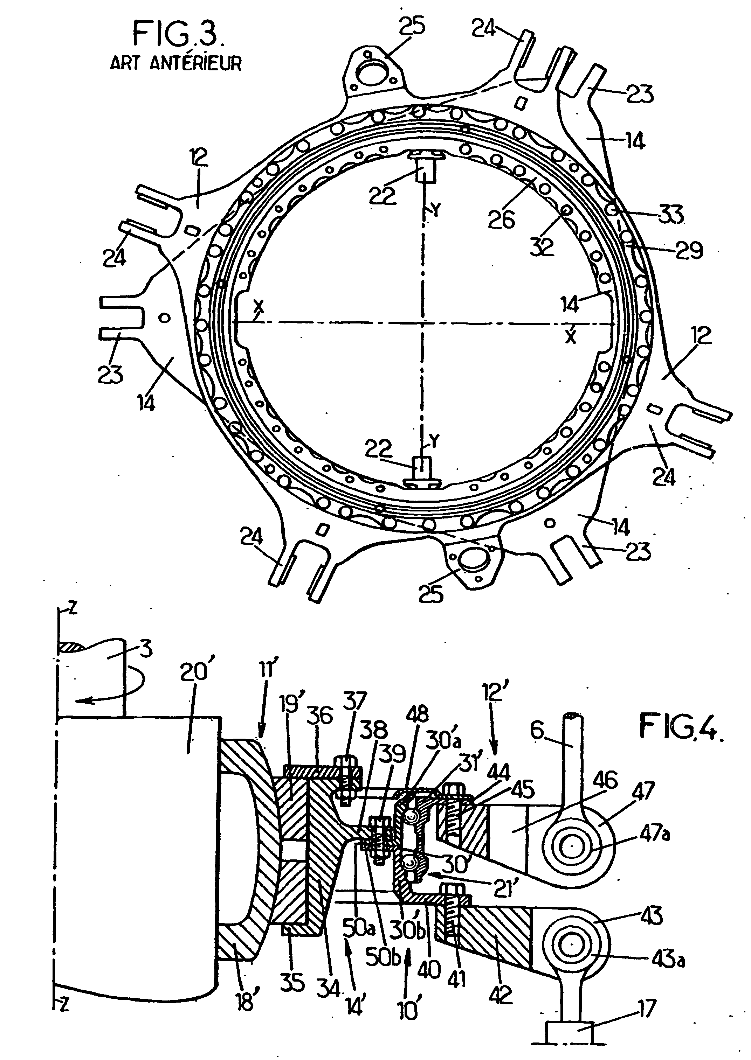

Le dispositif à plateaux cycliques de l'état de la technique, représenté schématiquement et partiellement en demi coupe transversale sur la figure 2 et en plan sur la figure 3, est d'ailleurs un dispositif à colonnes fixes (non représentées) sur lesquelles un anneau de cardan (également non représenté) coulisse axialement et peut basculer, par deux liaisons pivotantes coaxiales, autour d'un premier axe diamétral X-X, tandis que le plateau non tournant 14, en position radiale interne par rapport au plateau tournant 12 et au roulement 21 à deux rangées de billes interposées entre deux plateaux 12 et 14, supporte deux tourillons de cardan 22 diamétralement opposés et en saillie radiale vers le centre du plateau non tournant 14, en étant coaxiaux autour d'un deuxième axe diamétral Y-Y de pivotement des tourillons 22 sur l'anneau de cardan.

Chacun des plateaux 12 et 14 est une pièce annulaire massive, monobloc, coûteuse, car sa réalisation nécessite des usinages longs délicats et précis pour réaliser non seulement les portées coopérant avec les bagues du roulement 21, mais également les trois chapes 23, en saillie radiale vers l'extérieur sur la partie axiale inférieure du plateau non tournant 14, pour la reprise des organes de commande pilote tels que 17 sur la figure I, ainsi que des quatre chapes 24 (pour un rotor quadripale) en saillie radiale vers l'extérieur sur le plateau tournant 12, pour la reprise des extrémités inférieures des bielles de pas telles que 6 sur la figure I, et les deux ferrures de liaison 25, pouvant être également agencées en chape, pour la reprise de l'extrémité inférieure des bras inférieurs de deux compas tournants (non représentés mais tels que 13 sur la figure I) pour l'entraînement du plateau tournant 12 en rotation.

La réalisation des figures 2 et 3 présente de plus les inconvénients suivants le roulement 21 doit être fabriqué avec des dimensions spécifiques ; roulement 21 est monté serré sur le plateau tournant 12 ou sur le plateau non tournant 14, voire sur les deux plateaux 12 et 14, ce qui entraîne des difficultés de montage en atelier, ou lors d'un échange de l'un au moins des plateaux 12 et 14 chez un utilisateur, d'autant qu'un phénomène de fretting corrosion a pu apparaître au niveau des interfaces le montage du roulement 21 impose également l'utilisation de deux brides 26 et 27 de fixation de ce roulement 21 sur les plateaux 14 et 12, ainsi que d'un joint d'étanchéité 28 et du porte-joint 29 correspondant, la bride supérieure 26 de fixation de la bague intérieure 30 du roulement 21 permettant d'assurer la mise en précontrainte de cette même bague intérieure 30, subdivisée en deux demi-bagues 30a et 30b, chacune pour l'une des deux rangées de billes, et qui sont axialement bout à bout et serrées l'une contre l'autre par la fixation de la bride supérieure 26 sur l'extrémité axiale supérieure du plateau non tournant 14 à l'aide d'une couronne de vis de fixation 32, cette précontrainte permettant d'éviter tout décollement des pièces constituant le roulement 21, et donc tout mouvement relatif indésirable, du fait de la bride inférieure 27 retenant la bague externe 31 du roulement 21 à l'aide d'une couronne de vis 33 fixant la bride 27 sous le plateau tournant 12, les vis 33 retenant simultanément, au-dessus du plateau tournant 12, le support 29 du joint d'étanchéité 28 ; la disposition de l'ensemble des plateaux cycliques 12 et 14 autour de l'arbre, tel que 3 sur la figure I, entraîne nécessairement, en cas de problème rencontré chez les utilisateurs sur l'un des bras aménagé en chape 23 ou 24 des plateaux non-tournant 14 et tournant 12, une dépose de l'ensemble du rotor principal tel que I sur la figure I, c'est-à-dire du moyeu 4 et des pales 2, ce problème pouvant être dû à des jeux dans les assemblages, à une perte d'un couple de serrage, à un phénomène de corrosion, à l'apparition de criques, ou à des coups reçus par ces éléments ; les problèmes rencontrés sur les plateaux cycliques 12 et 14 sont également dus à la définition même de chacun des plateaux, qui est réalisé à partir d'une ébauche de grande dimension, et donc d'un poids et d'un prix de revient importants.

Le problème à la base de l'invention est de remédier aux inconvénients des dispositifs à plateaux cycliques de la technique antérieure, en terme de complexité, de nombre de pièces, de masse, de coûts de maintenance et de coûts de fabrication.

Le but de l'invention est de proposer un ensemble de plateaux cycliques de conception simple, utilisant des ferrures de liaison non-tournantes et tournantes modulaires, simples à monter et à entretenir chez les utilisateurs, avec un gain important en terme de masse et de prix.

A cet effet, le dispositif à plateaux cycliques selon l'invention, pour un rotor du type présenté ci-dessus, et qui est lui-même du type comprenant deux plateaux annulaires et coaxiaux, entourant l'axe Z-Z du rotor, et montés sur un mécanisme de guidage en translation axiale et en basculement desdits plateaux par rapport à l'axe Z-Z du rotor, et dont l'un est un plateau tournant relié, d'une part, au moyeu et/ou à l'arbre du rotor, par au moins un organe d'entraînement du plateau tournant en rotation avec le rotor, autour de son axe Z-Z, et d'autre part, à chaque pale par la bielle de pas correspondante, ledit plateau tournant étant monté en rotation par au moins un roulement sur l'autre plateau, qui est un plateau non tournant relié, d'une part, à la structure dudit giravion par au moins un organe de retenue immobilisant ledit plateau non tournant en rotation autour dudit axe du rotor Z-Z, et, d'autre part, à des organes de commande pilote, qui sollicitent le plateau non tournant de sorte que les mouvements de translation axiale et/ou de basculement imposés au plateau non tournant à partir des commandes pilote sont suivis par le plateau tournant, qui transmet le pas à donner aux pales du rotor par l'intermédiaire des bielles de pas, se caractérise en ce que l'un au moins des deux plateaux comprend un ensemble modulaire de ferrures de liaison pour assurer les liaisons dudit plateau avec les bielles de pas et/ou ledit au moins un organe d'entraînement ou avec les organes de commande pilote et/ou ledit au moins un organe de retenue, et en ce que les ferrures de liaison dudit ensemble sont fixées rigidement et de manière amovible sur un organe annulaire du plateau correspondant.

Bien entendu, des ferrures pour la liaison avec un ou plusieurs organes d'entraînement et/ou avec un ou plusieurs organes de retenue ne sont nécessaires que dans la mesure où l'entraînement en rotation du plateau tournant avec le rotor et/ou la retenue du plateau non tournant contre toute rotation n'est ou ne sont pas assurée(s) par la structure du mécanisme de guidage en translation et en basculement des plateaux cycliques.

Avantageusement, l'ensemble modulaire de ferrures de liaison dudit plateau non tournant comprend des premières ferrures de liaison non-tournantes identiques les unes aux autres, en nombre égal auxdits organes de commande pilote, et dont chacune relie ledit plateau non tournant à l'un respectivement desdits organes de commande pilote, et/ou ledit ensemble modulaire de ferrures de liaison dudit plateau tournant comprend des premières ferrures de liaison tournantes, identiques les unes aux autres, en nombre égal auxdites bielles de pas, et dont chacune relie ledit plateau tournant à l'une respectivement desdites bielles de pas. Si des organes d'entraînement du plateau tournant ou de retenue du plateau non tournant équipent le dispositif en étant indépendants du mécanisme de guidage en translation et en basculement, le dispositif est alors avantageusement tel que l'ensemble modulaire de ferrures de liaison dudit plateau non tournant comprend au moins une seconde ferrure de liaison non tournante, en nombre égal audit au moins un organe de retenue, pour relier ledit plateau non tournant audit au moins un organe de retenue, et/ou ledit ensemble modulaire de ferrures de liaison dudit plateau tournant comprend au moins une seconde ferrure de liaison tournante, en nombre égal audit au moins un organe d'entraînement, pour relier ledit plateau tournant audit au moins un organe d'entraînement.

Ainsi, en rapportant individuellement et amoviblement sur l'organe annulaire du plateau tournant les première ferrures de liaison tournantes et, en tant que de besoin, une ou des secondes ferrures de liaison tournantes, on reconstitue, grâce à cet ensemble modulaire de ferrures de liaisons tournantes, un assemblage annulaire rigide correspondant à l'essentiel d'un plateau tournant traditionnel, en bénéficiant de l'avantage de pouvoir individuellement démonter et déposer chaque ferrure de liaison tournante de cet ensemble pour la remplacer, en cas de besoin, sans intervention sur les autres ferrures de liaison tournantes, et sans imposer de dépose du rotor.

Il en est de même pour les premières ferrures de liaisons non-tournantes, et, le cas échéant, une ou des secondes ferrures de liaison non-tournantes, qui, lorsqu'elles sont fixées individuellement et amoviblement sur l'organe annulaire du plateau non tournant, reconstituent un assemblage annulaire rigide qui correspond à l'essentiel d'un plateau non tournant conventionnel, avec les mêmes avantages qu'exposés ci-dessus pour le démontage et la dépose de chacune des ferrures non-tournantes de l'ensemble correspondant.

Ces avantages sont encore plus marqués si l'organe annulaire de l'un au moins des plateaux, mais de préférence de chacun d'eux, est constitué par l'une respectivement des bagues interne et externe du roulement de montage rotatif du plateau tournant sur le plateau non tournant.

Toutefois, pour permettre l'adaptation d'au moins un ensemble modulaire de ferrures de liaison sur l'un au moins des deux plateaux d'un ensemble de plateaux cycliques existant, en conservant son roulement et son mode de montage, il peut être avantageux que, selon l'invention, l'organe annulaire d'au moins un plateau soit un anneau intermédiaire emmanché avec l'une des bagues interne et externe dudit roulement, cette disposition pouvant être adoptée pour les deux bagues, en cas de besoin.

Que l'organe annulaire auquel les ferrures de liaison d'un ensemble sont fixées de manière amovible soit l'une des bagues du roulement ou un anneau intermédiaire emmanché avec l'une des bagues du roulement, la fixation des ferrures de liaison d'un même ensemble est facilitée si ces ferrures sont fixées sur l'organe annulaire du plateau correspondant par l'intermédiaire d'une collerette solidaire dudit organe annulaire et sur laquelle lesdites ferrures de liaison sont rapportées chacune de manière amovible, de préférence par boulonnage sur la collerette correspondante, ou par tout autre moyen de fixation mécanique équivalent.

Avantageusement, chaque ferrure de liaison a une forme en plan sensiblement triangulaire avec un côté en arc de cercle concave agencé en embase de fixation à une partie de la périphérie dudit organe annulaire correspondant ou de ladite collerette correspondante, le sommet opposé audit côté concave étant agencé en chape ou embout de reprise d'une rotule d'extrémité d'une bielle de pas ou d'un organe de commande pilote ou, lorsqu'il est nécessaire, d'un organe d'entraînement ou de retenue correspondant.

Dans le cas où les ferrures de liaison sont fixées à des collerettes, il est avantageux que la bague (interne ou externe) du roulement qui est liée en rotation au plateau tournant soit solidaire d'une collerette supérieure, en saillie sensiblement radialement vers l'extérieur du roulement à partir de l'extrémité axiale supérieure de ladite bague liée au plateau tournant, et par rapport à l'axe (Z-Z) du rotor, tandis que l'autre bague du roulement, liée au plateau non-tournant, est solidaire d'une collerette inférieure, en saillie sensiblement radialement vers l'extérieur du roulement à partir de l'extrémité axiale inférieure de ladite autre bague (liée au plateau non-tournant).

Dans cette configuration, chaque organe de commande pilote est de préférence relié par une liaison rotulée à l'une respectivement desdites premières ferrures de liaison non-tournantes fixées de manière amovible sur ladite collerette inférieure, et/ou chaque bielle de pas est de préférence reliée par une liaison rotulée à l'une respectivement desdites premières ferrures de liaison tournantes fixées de manière amovible sur ladite collerette supérieure.

De même, lorsqu'au moins un organe de retenue et/ou au moins un organe d'entraînement distinct (s) du mécanisme de guidage en translation et basculement est ou sont nécessaires, ledit au moins un organe de retenue est relié par une liaison rotulée à une seconde ferrure de liaison non-tournante respective fixée de manière amovible sur ladite collerette inférieure, et/ou ledit au moins un organe d'entraînement est relié par une liaison rotulée à une seconde ferrure de liaison tournante respective fixée de manière amovible sur ladite collerette supérieure.

Les ferrures de liaison d'au moins un ensemble modulaire peuvent être réalisées en alliage d'aluminium ou en matériau composite à matrice métallique d'aluminium ou de titane, à partir d'ébauches forgées ou matricées ou de plaques.

Lorsque le roulement est à deux rangées de corps roulants, et pour assurer une précharge du roulement comme dans l'état de la technique, l'une des bagues du roulement solidaire de l'un des deux plateaux non-tournant et tournant qui est fixé audit mécanisme de guidage en translation et basculement, est subdivisée en deux demi-bagues axialement bout à bout et munies chacune de l'une respectivement de deux collerettes radiales adjacentes, qui sont serrées axialement l'une contre l'autre pour assurer une mise en précontrainte du roulement, et par lesquelles ledit plateau est fixé audit mécanisme de guidage en translation et basculement.

De manière connue, le mécanisme de guidage en translation et basculement peut comprendre une rotule centrale, centrée sur l'axe Z-Z du rotor et sur laquelle le plateau non-tournant est monté oscillant par au moins un patin à portée en calotte sphérique, ladite rotule étant montée coulissante parallèlement à l'axe Z-Z du rotor autour d'un guide cylindrique coaxial à l'axe Z-Z du rotor et non-tournant autour dudit axe Z-Z du rotor, et de préférence fixe par rapport à la structure du giravion.

Dans ce cas, il est avantageux que ledit au moins un patin soit relié de manière amovible, de préférence par boulonnage, aux deux collerettes radiales adjacentes de précontrainte de la bague interne du roulement.

Mais comme connu, le mécanisme de guidage en translation et basculement peut également comprendre une liaison à joint de cardan, avec un anneau de cardan monté pivotant, d'une part, autour d'un premier axe diamétral de l'anneau de cardan, et perpendiculaire à l'axe du rotor, par deux liaisons pivotantes coaxiales sur deux coulisseaux guidés en translation axiale chacun sur l'une respectivement de deux colonnes de guidage parallèles à l'axe du rotor et symétriques l'une de l'autre par rapport audit axe, dans un même plan diamétral passant par ce dernier, et, d'autre part, autour d'un second axe diamétral, perpendiculaire au premier axe diamétral, par deux liaisons pivotantes à tourillons axiaux et diamétralement opposés, reliant l'anneau de cardan à celui des deux plateaux non-tournant et tournant qui est relié audit mécanisme de guidage en translation et basculement.

Dans ce cas, il est également avantageux que les deux tourillons, pour le montage pivotant sur l'anneau de cardan, soient supportés par les deux collerettes radiales adjacentes prévues sur les deux demi-bagues internes du roulement pour assurer sa précontrainte axiale.

D'autres avantages et caractéristiques de l'invention découleront de la description donnée ci-dessous, à titre non limitatif, de deux exemples de réalisation décrits en référence aux dessins annexés sur lesquels: .
- la figure I est une représentation schématique d'une tête de rotor quadripale équipée d'un dispositif à plateaux cycliques de l'état de la technique, avec un mécanisme de guidage en translation axiale et basculement équipé d'une rotule centrale, et des organes d'entraînement du plateau tournant et de retenue du plateau non-tournant qui sont des compas respectivement tournant et non-tournant, ce dispositif étant décrit ci-dessus,
- les figures 2 et 3 sont des vues schématiques partielles respectivement en coupe axiale et en plan d'un dispositif à plateaux cycliques de l'état de la technique analogue à celui de la figure I, mais avec un mécanisme de guidage en translation et en basculement d'un autre type connu, avec anneau de cardan translaté et articulé à pivotement sur deux colonnes non-tournantes,
- la figure 4 est une vue schématique partielle en coupeaxiale d'un premier exemple de dispositif à plateaux cycliques selon l'invention,
- les figures 5 et 6 sont des vues correspondant sensiblement et respectivement aux figures 2 et 3 de l'état de la technique pour un second exemple de dispositif à plateaux cycliques selon l'invention,
- les figures 7 et 8 sont des vues schématiques en perspectives de côté et respectivement de dessus et du dessous d'un ensemble à plateaux cycliques selon les figures 5 et 6, et
- la figure 9 est une vue schématique en perspective correspondant sensiblement à la figure 7 avec représentation de l'anneau de cardan et des coulisseaux de guidage du dispositif sur deux colonnes non-tournantes.

La figure 4 représente, en demi-coupe axiale, la partie centrale d'un dispositif à plateaux cycliques 10' selon l'invention, dont l'architecture générale est analogue à celle du dispositif à plateaux cycliques de la figure I pour ce qui concerne le mécanisme II' de guidage en translation et basculement avec rotule centrale, et les organes respectivement d'entraînement tel que 13 et de retenue tel que 16, ou compas respectivement tournant et non-tournant, et équipant un rotor I selon la figure I, de sorte que les mêmes références numériques que sur les figures I à 3, mais affectées d'un symbole prime, sont utilisées pour désigner les éléments correspondants sur l'exemple de la figure 4.

Sur cette figure 4, on retrouve donc un guide tubulaire cylindrique 20', coaxial à l'axe Z-Z du rotor et non-tournant autour de ce dernier, car fixé à la structure du giravion, ce guide 20' entourant sans contact l'arbre 3 du rotor, et une rotule centrale 18' est montée coulissante parallèlement à l'axe Z-Z autour du guide 20'.

Un patin annulaire 19' en deux segments, présentant une portée radiale interne en calotte sphérique concave correspondant à la convexité de la face externe de la rotule 18', est monté oscillant sur la rotule 18', et les deux segments du patin 19' sont maintenus en coopération glissante contre la rotule 18' par une bride annulaire 34 avec une collerette radiale interne 35 à son extrémité axiale inférieure, et une collerette 36 rapportée sur son extrémité axiale supérieure, sur laquelle la collerette 36 est fixée par une couronne de vis 37. Radialement vers l'extérieur et dans sa partie centrale, la bride annulaire présente une collerette externe 38, sur laquelle sont boulonnées, par une couronne de vis axiales 39, les deux collerettes radiales internes 50a et 50b superposées et en saillie sur les extrémités respectivement inférieure et supérieure de la demi-bague interne supérieure 30' a et de la demi-bague interne inférieure 30' b axialement bout à bout pour former la bague interne 30' du roulement 21' à deux rangées de billes à contact oblique. Ainsi, les deux collerettes internes 50a et 50b des demi-bagues internes 30'a et 30'b servent non seulement à précontraindre le roulement 21', mais également à fixer la bague interne 30' de ce dernier au mécanisme II' de guidage en translation axiale et en basculement, constitué de la bride annulaire 34, du patin 19' et de la rotule 18' coulissant axialement sur le guide 20'.

La bague interne 30' constitue ainsi, avec la bride 34 une partie du plateau non-tournant 14' fixé à ce mécanisme de guidage II'.

A son extrémité axiale inférieure, la demi-bague interne inférieure 30'b est solidaire d'une collerette radiale 40, en saillie vers l'extérieur du roulement 21', et à la périphérie de laquelle sont individuellement fixées, de manière amovible, à l'aide de vis axiales 41, les ferrures de liaison non-tournantes d'un ensemble modulaire de telles ferrures non-tournantes, comprenant trois ferrures de liaison 42, dont l'extrémité radiale externe est aménagée en chape 43, et destinée chacune à assurer la liaison du plateau non-tournant 14' avec la rotule 43a de l'extrémité supérieure de l'une respectivement de trois servocommandes pilotes 17 de commande des translations et basculements du plateau non-tournant 14', cet ensemble de ferrures de liaison non-tournantes comprenant également une autre ferrure (non représentée) également boulonnée de manière amovible sous la périphérie externe de la collerette 40, et dont l'extrémité radiale externe est également aménagée en chape, pour la reprise d'une articulation, par exemple à rotule, de l'extrémité supérieure du bras supérieur d'un compas non-tournant lié par l'extrémité inférieure de son bras inférieur à la structure de l'aéronef, pour retenir le plateau non-tournant 14' contre toute rotation autour de l'axe Z-Z du rotor.

De manière analogue, l'extrémité axiale supérieure de la bague externe 31' du roulement 21' est solidaire d'une collerette 44 radiale en saillie vers l'extérieur roulement 21', et à la périphérie de laquelle sont individuellement boulonnées, de manière amovible, par une couronne de vis axiales 45, les ferrures de liaison tournantes d'un ensemble modulaire de telles ferrures de liaison comprenant quatre ferrures telles que 46, dont l'extrémité radiale externe de chacune est aménagée en chape 47, et destinées chacune à la liaison à la rotule 47a de l'extrémité inférieure d'une bielle de pas telle que 6 sur la figure I, sur un rotor quadripale, cet ensemble de ferrures de liaison tournantes comprenant également deux ferrures tournantes (non représentées) également boulonnées sous la périphérie de la collerette supérieure 44 et également aménagées en chape pour la reprise des articulations, par exemple à rotule, des extrémités inférieures des bras inférieurs de deux compas tournants tels que 13 sur la figure I, pour l'entraînement en rotation du plateau tournant 12' constitué par la bague externe 31' du roulement 21' avec sa collerette 44 et les ferrures de liaison tournantes de l'ensemble correspondant.

Dans les deux ensembles de ferrures de liaison décrits ci-dessus, les trois ferrures non-tournantes 42 sont identiques les unes aux autres, et les quatre ferrures de liaison tournantes 46 sont identiques les unes aux autres, ainsi que les deux ferrures tournantes (non représentées) de liaison aux deux compas tournants tels que 13. De plus, les vis 45 fixent simultanément et rigidement sur la collerette 44 de la bague interne 31' non seulement les ferrures de liaison tournantes telles que 46, mais également un couvercle de protection annulaire 48, qui recouvre les extrémités supérieures des deux bagues 30' et 31' du roulement 21' ainsi que l'interface entre elles, de sorte à protéger le roulement 21', qui intègre l'étanchéité à la graisse. Ce roulement 21' est de préférence un roulement inoxydable, à bagues interne 30' et externe 31' en un matériau inoxydable, qui constitue également les collerettes 40 et 44.

Toutes les ferrures de liaison tournantes, telles que 46, et non-tournantes, telles que 42, peuvent être fabriquées en un alliage d'aluminium, ou, en variante, en un matériau composite à matrice métallique d'aluminium ou de titane, chacune à partir d'une ébauche simple, du type forgé ou matricé, ou, en variante, à partir d'une ébauche plus commune, voire d'une plaque standard, conformée par un usinage à grande vitesse.

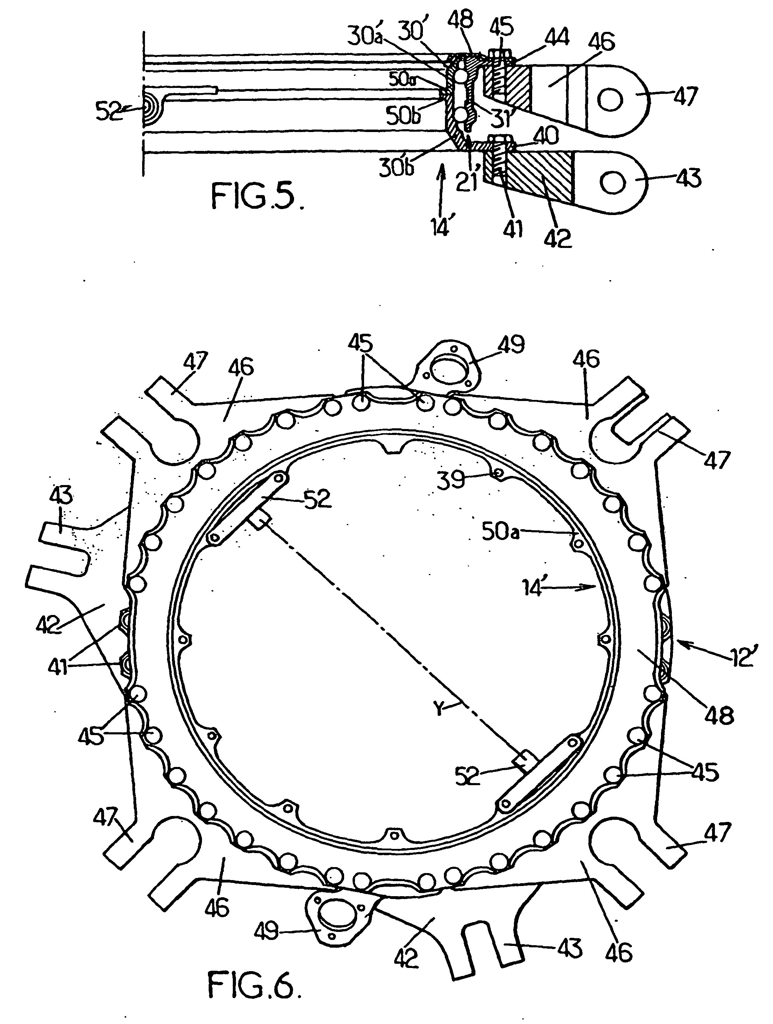

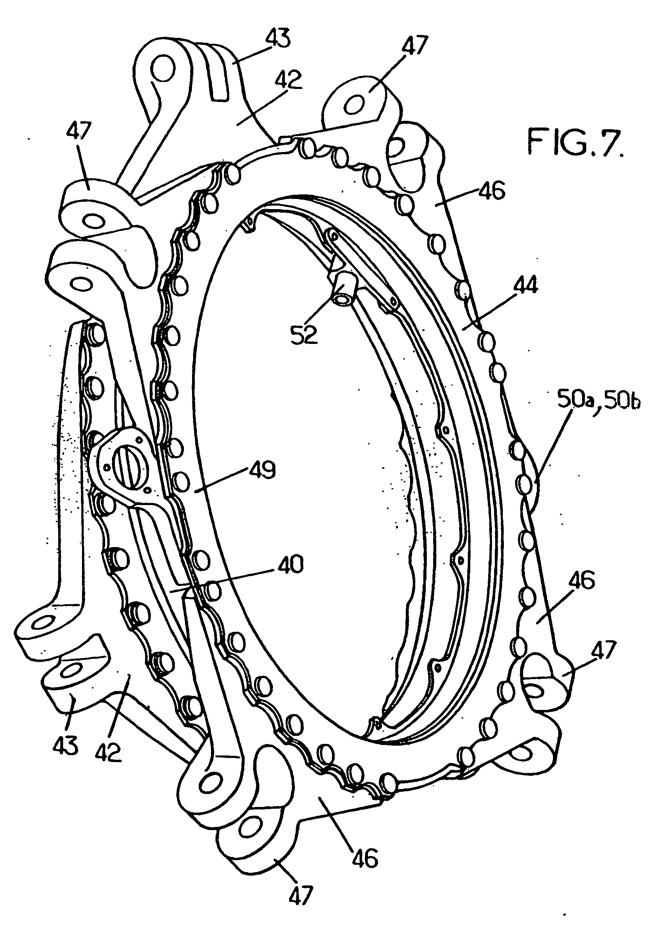

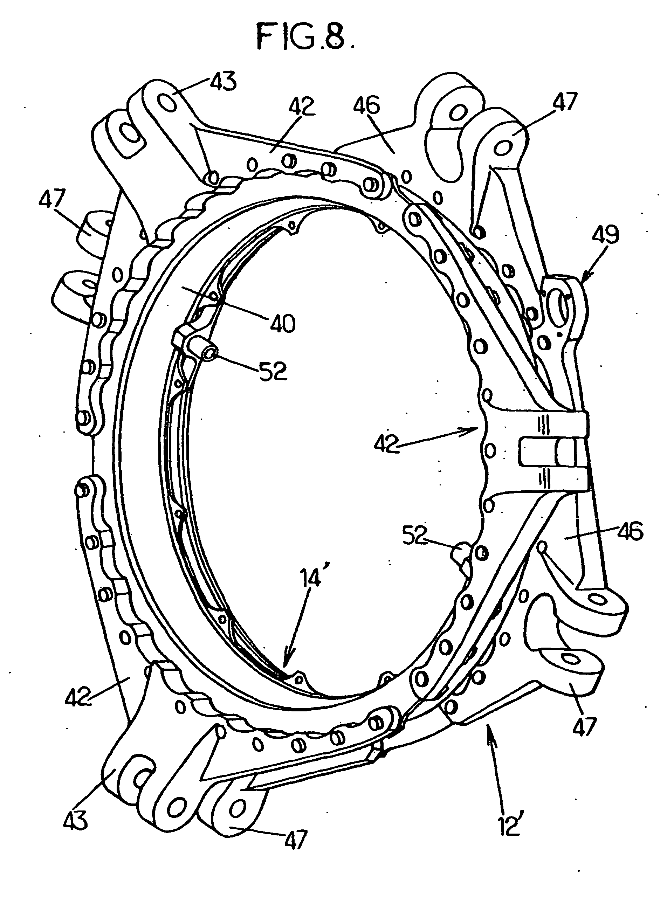

Dans le deuxième exemple des figures 5 à 9, on retrouve (voir figure 5) le roulement 21' à deux rangées de billes, dont la bague externe 31' est d'une seule pièce avec la collerette supérieure 44, sous la périphérie de laquelle sont individuellement boulonnées, par des vis 45, toutes les ferrures de liaison tournantes de l'ensemble de ferrures de liaison équipant le plateau tournant 12', dont l'unique organe annulaire est constitué par la bague externe 31' avec sa collerette supérieure 44. Cet ensemble de ferrures de liaison comprend des ferrures 46 d'un premier type, en nombre égal aux pales du rotor, donc aux bielles de pas telles que 6 sur la figure I, dans cet exemple quatre ferrures 46 puisque le rotor est quadripale, ces ferrures 46 étant identiques les unes aux autres et aménagées chacune, dans sa partie d'extrémité radiale externe, en chape 47 destinée à être reliée par une liaison rotulée, à l'une respectivement des quatre bielles de pas. Cet ensemble de ferrures de liaison tournantes comprend également au moins une ferrure tournante 49 d'un second type, destinée à être reliée, également par une liaison rotulée, à un organe d'entraînement correspondant, tel qu'un compas tournant 13 de la figure I. Dans cet exemple, l'ensemble des ferrures tournantes comprend deux ferrures 49 identiques, diamétralement opposées (voir figure 6), boulonnées chacune par deux vis 45 sous la collerette 44, entre deux ferrures de liaison tournantes 46 du premier type, car ce second exemple de dispositif à plateaux cycliques a son plateau tournant 12' entraîné en rotation par deux compas tournants tels que 13 sur la figure I.

On retrouve également que la bague interne 30' du roulement 21', réalisée en deux demi-bagues internes 30'a et 30'b, axialement bout à bout et serrées l'une contre l'autre par une couronne de vis 39 vissées dans les deux collerettes radiales internes 50a et 50b des extrémités adjacentes des demi-bagues 30'a et 30'b de sorte à précharger le roulement 21', a sa demi-bague inférieure 30'b d'une seule pièce avec la collerette radiale externe inférieure 40, à la périphérie de laquelle sont individuellement boulonnées, par des vis 41, toutes les ferrures de liaison non-tournantes de l'ensemble modulaire de ferrures de liaison équipant le plateau non-tournant 14', dont la bague interne 30' du roulement 21' avec sa collerette inférieure 40 constitue le seul organe annulaire. Cet ensemble de ferrures non-tournantes comprend trois ferrures identiques 42 d'un premier type, dont l'extrémité radiale externe de chacune est aménagée en chape 43 destinée à être reliée, par une liaison rotulée, à l'un respectivement des trois organes de commandes pilotes tels que 17 sur la figure I, commandant les translations et basculements du plateau non-tournant 14'. L'ensemble des ferrures de liaison non-tournantes de cet exemple ne comprend pas de ferrure non-tournante d'un second type, destinée à être reliée, par une liaison rotulée ou pivotante, à au moins un organe de retenue en rotation du plateau non-tournant 14', tel que le compas non-tournant 16 de la figure I, car ce second exemple comporte un mécanisme de guidage en translation et basculement du plateau non-tournant 14' qui est du type à anneau de cardan coulissant et oscillant sur deux colonnes de guidage non-tournantes, lesquelles remplissent simultanément la fonction d'organes de retenue du plateau non-tournant 14' contre toute rotation autour de l'axe Z-Z du rotor.

Comme représenté sur la figure 6, les ferrures de liaison tournantes 46 et 49 ainsi que les ferrures de liaison non-tournantes 42 présentent chacune une forme générale en plan sensiblement triangulaire, avec un côté en arc de cercle concave, tourné vers la collerette supérieure 44 ou inférieure 40 correspondante, et constituant une embase de fixation par boulonnage, grâce aux vis 45 et 41, des ferrures de liaison tournantes 46 et 49 et non-tournantes 42 respectivement sous les collerettes 44 et 40 correspondantes (voir figure 5). Sur chacune de ces ferrures 46, 49 et 42, le sommet opposé au côté en arc de cercle concave est aménagé en chape telles que 47 et 43, à deux branches parallèles s'étendant dans des plans sensiblement diamétraux des plateaux tournant 12' et non-tournant 14', alors que les chapes aux extrémités externes des ferrures de liaison 49 pour la reprise des compas tournants ont leurs branches sensiblement perpendiculaires à l'axe des plateaux 12' et 14'.

Dans cet exemple, on retrouve également un couvercle de protection 48 boulonné par les vis 45 sur la collerette supérieure 44 et recouvrant la partie supérieure du roulement 21'.

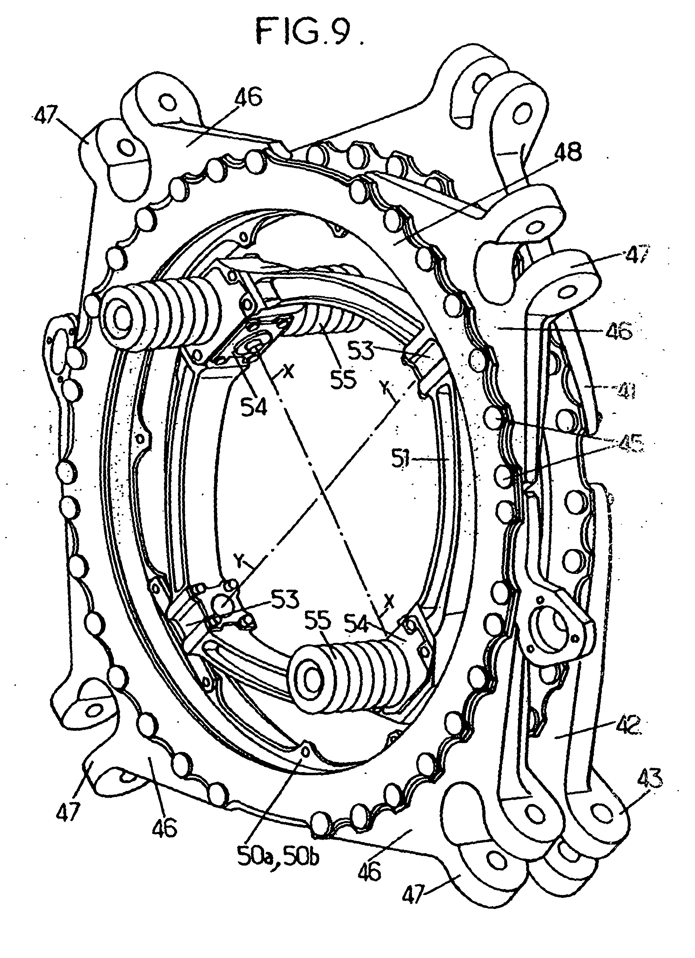

Concernant le mécanisme de guidage en translation et basculement des plateaux 12' et 14', ce mécanisme comprend une liaison à joint de cardan avec un anneau de cardan 51 (voir figure 9), qui est monté pivotant sur deux tourillons 52 (voir figure 6) coaxiaux, diamétralement opposés par rapport à l'axe des plateaux 12' et 14', et en saillie radiale vers l'intérieur du plateau non-tournant 14', sur lequel les tourillons 52 sont supportés par des vis 39 sur les collerettes radiales internes 50a et 50b de la bague interne 30' du roulement 21'. Les liaisons pivotantes par lesquelles le plateau non-tournant 14', et donc l'ensemble des deux plateaux 12' et 14', tourillonnent autour de l'axe diamétral Y-Y des tourillons 52 sur l'anneau de cardan 51 sont repérées dans leur ensemble en 53 sur la figure 9. L'anneau de cardan 51 est également monté pivotant, autour d'un autre axe diamétral X-X de cet anneau 51, qui est perpendiculaire à l'axe diamétral Y-Y des tourillons 52, par deux liaisons pivotantes coaxiales repérées dans leur ensemble en 54 sur la figure 9, sur deux coulisseaux 55 tubulaires, agencés en soufflets s'étendant axialement des deux côtés de l'anneau de cardan 51, et destinés à être chacun monté coulissant sur l'une respectivement de deux colonnes de guidage (non représentées), parallèles à l'axe Z-Z du rotor et symétriques l'une de l'autre par rapport à cet axe, dans un même plan diamétral passant par ce dernier, ces deux colonnes étant fixées sur la structure du giravion.

Un tel mécanisme de guidage en translation et basculement à joint de cardan avec anneau de cardan monté tourillonnant à l'intérieur du plateau non-tournant, d'une part, et, d'autre part, sur des coulisseaux coulissant parallèlement à l'axe du rotor sur des colonnes fixes, est décrit en référence aux figures 5 et 6 du brevet US-6,280,141, auquel on se reportera pour davantage de précisions à ce sujet. Le mécanisme de guidage en translation et basculement partiellement représenté sur la figure 9 de la présente demande peut être réalisé comme décrit dans le brevet US précité.

Par rapport aux réalisations de l'état de la technique tel que représenté sur les figures 2 et 3, il est clair qu'un dispositif à plateaux cycliques selon l'invention permet d'obtenir une réduction du nombre de pièces: les brides supérieure 26 et inférieure 27 de fixation du roulement 21 de la figure 2 ainsi que le support 29 du joint d'étanchéité 28 sont supprimés. Le montage d'un dispositif selon l'invention est également simplifié par rapport à ceux de l'état de la technique, puisque les ferrures de liaison non-tournantes telles que 42 et tournantes telles que 46 et 49 se fixent individuellement par un montage mécanique ne nécessitant pas d'outillage particulier, et sans risque d'abîmer les alésages des plateaux tournant et non-tournant lors du montage. Sur un hélicoptère équipé d'un dispositif selon l'invention, l'utilisateur bénéficie de la possibilité de changer une ferrure de liaison tournante ou non-tournante sans déposer les pales ni le moyeu du rotor, alors qu'avec les réalisations de l'état de la technique, l'ensemble à plateaux cycliques doit être réparé par un réparateur agréé, après dépose du rotor. Avec le dispositif de l'invention, l'utilisateur peut déposer une ferrure de liaison endommagée sur l'aéronef, à son propre niveau de maintenance, d'où une réduction très conséquente de temps et de coût. En terme de maintenance préventive ou prédictive, conformément aux principes modernes de dépose des éléments mécaniques selon leur état, le fait de disposer, sur le dispositif à plateaux cycliques de l'invention, de ferrures de liaison modulaires, économiques, faciles à changer, contribue à une réduction importance du coût de maintenance.

En outre, un ensemble de plateaux cycliques selon l'état de la technique pèse environ 55 kg pour un hélicoptère d'une masse de 8 à 10 t, alors qu'un ensemble de plateaux cycliques réalisé selon la présente invention pèse environ 45 kg pour une même définition d'hélicoptère.

Simultanément, un ensemble de plateaux cycliques réalisé selon la présente invention coûte environ deux fois moins cher que celui réalisé selon les techniques habituelles pour un hélicoptère de la gamme précisée ci-dessus.

Grâce à l'invention, il est également possible de modifier un dispositif à plateaux cycliques existant. Pour cela, il peut être ajouté, au niveau de l'un et/ou de l'autre des plateaux non-tournant et tournant, un anneau intermédiaire qui, d'une part, permet l'emmanchement de la bague du roulement liée au plateau correspondant, et, d'autre part, comporte une collerette de fixation amovible et individuelle des ferrures de liaison modulaires correspondantes.

L'intérêt d'une telle configuration est de permettre l'adaptation d'au moins un ensemble de ferrures modulaires à un dispositif à plateaux cycliques existant, en conservant son roulement et son mode de montage. Cette configuration peut être adoptée pour l'une et/ou l'autre des bagues interne et externe du roulement.

## Revendications

1. Dispositif à plateaux cycliques, pour commander le pas des pales (2) d'un rotor (I) de giravion, tel qu'un rotor principal d'hélicoptère, rotor (I) sur lequel chaque pale (2) est, d'une part, entraînée en rotation autour d'un axe de rotation (Z-Z) d'un arbre (3) du rotor (1) par l'intermédiaire d'un moyeu (4) solidaire en rotation de l'arbre (3), et, d'autre part, solidaire en rotation, autour d'un axe longitudinal de changement de pas (A-A) de la pale (2), d'au moins un levier (5) de pas commandé par une bielle (6) de pas correspondante, ledit dispositif (10') étant du type comprenant deux plateaux annulaires et coaxiaux (12', 14'), entourant l'axe (Z-Z) du rotor (I), et montés sur un mécanisme (II') de guidage en translation axiale et en basculement desdits plateaux par rapport à l'axe (Z-Z) du rotor, et dont l'un est un plateau tournant (12') relié, d'une part, audit moyeu (4) et/ou audit arbre (3), par au moins un organe d'entraînement (13) du plateau tournant (12') en rotation avec le rotor (1), autour de son axe (Z-Z), et d'autre part, à chaque pale (2) par la bielle de pas (6) correspondante, ledit plateau tournant (12') étant monté en rotation par au moins un roulement (21') sur l'autre plateau, qui est un plateau non-tournant (14') relié, d'une part, à la structure (15) dudit giravion par au moins un organe de retenue (16) immobilisant ledit plateau non-tournant (14') en rotation autour dudit axe du rotor (Z-Z), et, d'autre part, à des organes de commande pilote (17), qui sollicitent le plateau non-tournant (14') de sorte que les mouvements de translation axiale et/ou de basculement imposés au plateau non-tournant (14') à partir des commandes pilote (17) sont suivis par le plateau tournant (12'), qui transmet le pas à donner aux pales (2) du rotor (I) par l'intermédiaire des bielles (6) de pas, ledit plateau tournant (12') comprenant un ensemble modulaire de ferrures de liaison (46) fixées rigidement (45) et de manière amovible sur un organe annulaire (31') pour assurer les liaisons de ce plateau tournant avec les bielles de pas (6) et/ou ledit au moins un organe d'entraînement (13),
**caractérisé en ce que** ledit plateau non-tournant (14') comprend un ensemble modulaire de ferrures de liaison (42) fixées rigidement (41) et de manière amovible sur un organe annulaire (30') pour assurer les liaisons de ce plateau non tournant avec les organes de commande pilote (17) et/ou ledit au moins un organe de retenue (16).

2. Dispositif à plateaux cycliques selon la revendication 1,
**caractérisé en ce que** ledit ensemble modulaire de ferrures de liaison dudit plateau non-tournant (14') comprend des premières ferrures de liaison non-tournantes (42) identiques les unes aux autres, en nombre égal auxdits organes de commande pilote (17), et dont chacune relie ledit plateau non-tournant (14') à l'un respectivement desdits organes de commande pilote (17), et/ou ledit ensemble modulaire de ferrures de liaison dudit plateau tournant (12') comprend des premières ferrures de liaison tournantes (46) identiques les unes aux autres, en nombre égal auxdites bielles de pas (6), et dont chacune relie ledit plateau tournant (12') à l'une respectivement desdites bielles de pas (6).

3. Dispositif à plateaux cycliques selon la revendication 2,
**caractérisé en ce que** ledit ensemble modulaire de ferrures de liaison dudit plateau non-tournant (14') comprend au moins une seconde ferrure de liaison non-tournante, en nombre égal audit au moins un organe de retenue (16), pour relier ledit plateau non-tournant (14') audit au moins un organe de retenue, (16) et/ou ledit ensemble modulaire de ferrures de liaison dudit plateau tournant (12') comprend au moins une seconde ferrure de liaison tournante (49), en nombre égal audit au moins un organe d'entraînement (13), pour relier ledit plateau tournant (12') audit au moins un organe d'entraînement (13).

4. Dispositif à plateaux cycliques selon l'une quelconque des revendications I à 3,
**caractérisé en ce que** ledit organe annulaire de l'un au moins des plateaux (14', 12') est constitué par l'une respectivement des bagues interne (30') et externe (31') du roulement (21') de montage rotatif du plateau tournant (12') sur le plateau non-tournant (14).

5. Dispositif à plateaux cycliques selon l'une quelconque des revendications I à 4,
**caractérisé en ce que** ledit organe annulaire d'au moins un plateau (12', 14') est un anneau intermédiaire emmanché avec l'une des bagues interne (30') et externe (31') dudit roulement (21').

6. Dispositif à plateaux cycliques selon l'une quelconque des revendications 1 à 5,
**caractérisé en ce que** les ferrures de liaison (42, 46-49) d'un même plateau (14', 12') sont fixées sur ledit organe annulaire (30', 31') dudit plateau par l'intermédiaire d'une collerette (40, 44) solidaire dudit organe annulaire (30', 31') et sur laquelle lesdites ferrures de liaison (42, 46-49) sont rapportées chacune de manière amovible.

7. Dispositif à plateaux cycliques selon la revendication 6,
**caractérisé en ce que** chaque ferrure de liaison (42, 46-49) d'un ensemble modulaire est rapportée par boulonnage (41, 45) sur la collerette correspondante (40, 44).

8. Dispositif à plateaux cycliques selon l'une quelconque des revendications I à 7,
**caractérisé en ce que** chaque ferrure de liaison (42, 46-49) a une forme en plan sensiblement triangulaire avec un côté en arc de cercle concave agencé en embase de fixation sur une partie de la périphérie dudit organe annulaire correspondant ou de ladite collerette (40, 44) correspondante, le sommet opposé audit côté concave étant agencé en chape (43, 47) ou embout de reprise d'une rotule d'extrémité d'une bielle de pas (6) ou d'un organe de commande pilote (17) ou d'entraînement (13) ou de retenue (16) correspondant.

9. Dispositif à plateaux cycliques selon l'une quelconque des revendications 6, 7 et 8 telle que rattachée à l'une des revendications 6 et 7,
**caractérisé en ce que** la bague (31') du roulement (21') qui est liée en rotation au plateau tournant (12') est solidaire d'une collerette supérieure (44), en saillie sensiblement radialement vers l'extérieur du roulement (21') à partir de l'extrémité axiale supérieure de ladite bague (31') liée au plateau tournant (12'), et par rapport à l'axe (Z-Z) du rotor, tandis que l'autre bague (30') du roulement (21'), liée au plateau non-tournant (14'), est solidaire d'une collerette inférieure (40), en saillie sensiblement radialement vers l'extérieur du roulement (21') à partir de l'extrémité axiale inférieure de ladite autre bague (30') liée au plateau non-tournant (14').

10. Dispositif à plateaux cycliques selon la revendication 9 telle que rattachée à la revendication 2,
**caractérisé en ce que** chaque organe de commande pilote (17) est relié par une liaison rotulée à l'une respectivement desdites premières ferrures de liaison non-tournantes (42) fixées de manière amovible sur ladite collerette inférieure (40), et/ou chaque bielle de pas (6) est reliée par une liaison rotulée à l'une respectivement desdites premières ferrures de liaison tournantes (46) fixées de manière amovible sur ladite collerette supérieure (44).

11. Dispositif à plateaux cycliques selon l'une des revendications 9, telle que rattachée à la revendication 2, et 10,
**caractérisé en ce que** ledit au moins un organe de retenue (16) est relié par une liaison rotulée à une seconde ferrure de liaison non-tournante respective fixée de manière amovible sur ladite collerette inférieure (40), et/ou ledit au moins un organe d'entraînement (13) est relié par une liaison rotulée à une seconde ferrure de liaison tournante (49) respective fixée de manière amovible sur ladite collerette supérieure (44).

12. Dispositif à plateaux cycliques selon l'une quelconque des revendications I à II,
**caractérisé en ce que** les ferrures de liaison (42, 46-49) d'au moins un ensemble modulaire sont réalisées en alliage d'aluminium ou en matériau composite à matrice métallique d'aluminium ou de titane, à partir d'ébauches forgées ou matricées ou de plaques.

13. Dispositif à plateaux cycliques selon l'une quelconque des revendications 1 à 12,
**caractérisé en ce que** l'une (30') des bagues du roulement (21'), solidaire de l'un des deux plateaux non-tournant (14') et tournant (12') qui est fixé audit mécanisme (II') de guidage en translation et basculement, est subdivisée en deux demi-bagues (30' a, 30' b) axialement bout à bout et munies chacune de l'une respectivement de deux collerettes radiales adjacentes (50a, 50b), qui sont serrées (39) axialement l'une contre l'autre pour assurer une mise en précontrainte du roulement (21'), et par lesquelles ledit plateau (14') est fixé audit mécanisme (II') de guidage en translation et basculement.

14. Dispositif selon l'une quelconque des revendications I à 13,
**caractérisé en ce que** ledit mécanisme (II') de guidage en translation et basculement comprend une rotule centrale (18'), centrée sur l'axe (Z-Z) du rotor et sur laquelle le plateau non-tournant (14') est monté oscillant par au moins un patin (19') à portée en calotte sphérique, ladite rotule (18') étant montée coulissante parallèlement à l'axe (Z-Z) du rotor autour d'un guide (20') cylindrique coaxial à l'axe (Z-Z) du rotor et non-tournant autour dudit axe (Z-Z) du rotor, et de préférence fixe par rapport à la structure (15) du giravion.

15. Dispositif selon l'une quelconque des revendications I à 13,
**caractérisé en ce que** ledit mécanisme de guidage en translation et basculement comprend une liaison à joint de cardan, avec un anneau de cardan (51) monté pivotant, d'une part, autour d'un premier axe diamétral, perpendiculaire à l'axe (Z-Z) du rotor, par deux liaisons pivotantes (54) coaxiales sur deux coulisseaux (55) guidés en translation axiale chacun sur l'une respectivement de deux colonnes de guidage, parallèles à l'axe (Z-Z) du rotor et symétriques l'une de l'autre par rapport audit axe (Z-Z) dans un même plan diamétral passant par ce dernier, et, d'autre part, autour d'un second axe diamétral, perpendiculaire au premier axe diamétral, par deux liaisons pivotantes (53) à tourillons (52) coaxiaux et diamétralement opposés, reliant l'anneau de cardan (51) à celui (14') des deux plateaux non-tournant (14') et tournant (12') qui est relié audit mécanisme de guidage en translation et basculement.

## Patentansprüche

1. Taumelscheibenvornchtung, um die Verstellung der Blätter (2) eines Rotors (1) eines Drehflügel-Flugzeugs, wie zum Beispiel eines Hubschrauber-Hauptrotors, zu steuern, Rotor (1), bei dem jedes Blatt (2) einerseits um eine Drehachse (Z-Z) einer Welle (3) des Rotors (1) mittels einer in Drehung fest mit der Welle (3) verbundenen Nabe (4) in Drehung versetzt wird, und andererseits um eine Blattverstellungs-Längsachse (A-A) des Blatts (2) mit mindestens einem Blattverstellhebel (5) drehfest verbunden ist, der von einer entsprechende Steuerstange (6) gesteuert wird, wobei die Vorrichtung (10') von der Art ist, die zwei ringförmige und koaxiale Scheiben (12', 14') aufweist, die die Achse (Z-Z) des Rotors (1) umgeben und auf einen Mechanismus (11') zur Führung der Scheiben in axialer Translations- und Kippbewegung bezüglich der Achse (Z-Z) des Rotors montiert sind, und von denen eine eine drehende Scheibe (12') ist, die einerseits mit der Nabe (4) und/oder der Welle (3) über mindestens ein Antriebsorgan (13) der drehenden Scheibe (12') in Drehung mit dem Rotor (1) um die Achse (Z-Z), und andererseits mit jedem Blatt (2) über die entsprechende Steuerstange (6) verbunden ist, wobei die drehende Scheibe (12') über mindestens ein Wälzlager (21') auf der anderen Scheibe drehbar montiert ist, die eine nicht-drehende Scheibe (14') ist, die einerseits mit dem Aufbau (15) des Drehflügel-Flugzeugs über mindestens ein Rückhalteorgan (16), das die nicht-drehende Scheibe (14') in Drehung um die Achse (Z-Z) des Rotors blockiert, und andererseits mit Pilotsteuerungsorganen (17) verbunden ist, die die nicht-drehende Scheibe (14') so beanspruchen, dass die axiale Translations- und/oder die Kippbewegungen, die der nicht-drehenden Scheibe (14') ausgehend von den Pilotsteuerungen (17) verliehen werden, von der drehenden Scheibe (12') verfolgt werden, die die den Blättern (2) des Rotors (1) zu verleihende Blattstellung über Steuerstangen (6) überträgt, wobei die drehende Scheibe (12') eine Moduleinheit von Verbindungsbeschlägen (46) aufweist, die starr (45) und lösbar an einem ringförmigen Organ (31') befestigt sind, um die Verbindungen dieser drehenden Scheibe mit den Steuerstangen (6) und/oder dem mindestens einen Antriebsorgan (13) zu gewährleisten, **dadurch gekennzeichnet, dass** die nicht-drehende Scheibe (14') eine Moduleinheit von Verbindungsbeschlägen (42) aufweist, die starr (41) und lösbar an einem ringförmigen Organ (30') befestigt sind, um die Verbindungen dieser nicht-drehenden Scheibe mit den Pilotsteuerungsorganen (17) und/oder dem mindestens einen Rückhalteorgan(16) zu gewährleisten.

2. Taumelscheibenvorrichtung nach Anspruch 1, **dadurch gekennzeichnet, dass** die Moduleinheit von Verbindungsbeschlägen der nicht-drehenden Scheibe (14') einander gleiche erste, nicht-drehende Verbindungsbeschläge (42) in einer Anzahl gleich den Pilotsteuerungsorganen (17) aufweist, von denen jeder die nicht-drehende Scheibe (14') mit einem der Pilotsteuerungsorgane (17) verbindet, und/oder die Moduleinheit von Verbindungsbeschlägen der drehenden Scheibe (12') einander gleiche, erste drehende Verbindungsbeschläge (46) in einer Anzahl gleich den Steuerstangen (6) aufweist, von denen jeder die drehende Scheibe (12') mit einer der Steuerstangen (6) verbindet.

3. Taumelscheibenvorrichtung nach Anspruch 2, **dadurch gekennzeichnet, dass** die Moduleinheit von Verbindungsbeschlägen der nicht-drehenden Scheibe (14') mindestens einen zweiten, nicht-drehenden Verbindungsbeschlag in einer Anzahl gleich dem mindestens einen Rückhalteorgan (16) aufweist, um die nicht-drehende Scheibe (14') mit dem mindestens einen Rückhalteorgan (16) zu verbinden, und/oder die Moduleinheit von Verbindungsbeschlägen der drehenden Scheibe (12') mindestens einen zweiten, drehenden Verbindungsbeschlag (49) in einer Anzahl gleich dem mindestens einen Antriebsorgan (13) aufweist, um die drehende Scheibe (12') mit dem mindestens einen Antriebsorgan (13) zu verbinden.

4. Taumelscheibenvorrichtung nach einem der Ansprüche 1 bis 3, **dadurch gekennzeichnet, dass** das ringförmige Organ mindestens einer der Scheiben (14', 12') aus einem der inneren (30') und äußeren Ringe (31') des Wälzlagers (21') zur drehbaren Montage der drehenden Scheibe (12') auf die nicht-drehende Scheibe (14) besteht.

5. Taumelscheibenvorrichtung nach einem der Ansprüche 1 bis 4, **dadurch gekennzeichnet, dass** das ringförmige Organ mindestens einer Scheibe (12', 14') ein Zwischenring ist, der mit einem der inneren (30') und äußeren Ringe (31') des Wälzlagers (21') zusammengepresst wird.

6. Taumelscheibenvorrichtung nach einem der Ansprüche 1 bis 5, **dadurch gekennzeichnet, dass** die Verbindungsbeschläge (42, 46-49) der gleichen Scheibe (14', 12') am ringförmigen Organ (30', 31') der Scheibe über einen Kragen (40, 44) befestigt sind, der fest mit dem ringförmigen Organ (30', 31') verbunden ist und auf den die Verbindungsbeschläge (42, 46-49) lösbar aufgesetzt sind.

7. Taumelscheibenvorrichtung nach Anspruch 6, **dadurch gekennzeichnet, dass** jeder Verbindungsbeschlag (42, 46-49) einer Moduleinheit durch Bolzenverbindung (41, 45) auf den entsprechenden Kragen (40, 44) aufgesetzt ist.

8. Taumelscheibenvorrichtung nach einem der Ansprüche 1 bis 7, **dadurch gekennzeichnet, dass** jeder Verbindungsbeschlag (42, 46-49) eine in der Ebene im wesentlichen dreieckige Form hat, mit einer Seite in konkaver Kreisbogenform, die als Befestigungssockel auf einem Teil des Umfangs des entsprechenden ringförmigen Organs oder des entsprechenden Kragens (40, 44) ausgebildet ist, wobei die der konkaven Seite entgegengesetzte Spitze als Gabelkopf (43, 47) oder als Aufnahme-Anschlussstück eines End-Kugelgelenks einer Steuerstange (6), oder eines entsprechenden Pilotsteuerungs- (17) oder Antriebs- (13) oder Rückhalteorgans (16) ausgebildet ist.

9. Taumelscheibenvorrichtung nach einem der Ansprüche 6, 7 und 8 in Verbindung mit einem der Ansprüche 6 und 7, **dadurch gekennzeichnet, dass** der Ring (31') des Wälzlagers (21'), der drehbar mit der drehenden Scheibe (12') verbunden ist, fest mit einem oberen Kragen (44) verbunden ist, der ausgehend vom oberen axialen Ende des Rings (31'), das mit der drehenden Scheibe (12') verbunden ist, und bezüglich der Achse (Z-Z) des Rotors im wesentlichen radial zur Außenseite des Wälzlagers (21') vorsteht, während der andere Ring (30') des Wälzlagers (21'), der mit der nicht-drehenden Scheibe (14') verbunden ist, fest mit einem unteren Kragen (40) verbunden ist, der ausgehend vom unteren axialen Ende des anderen Rings (30'), der mit der nicht-drehenden Scheibe (14') verbunden ist, im wesentlichen radial zur Außenseite des Wälzlagers (21') vorsteht.

10. Taumelscheibenvorrichtung nach Anspruch 9 in Verbindung mit Anspruch 2, **dadurch gekennzeichnet, dass** jedes Pilotsteuerungsorgan (17) über eine Kugelgelenkverbindung mit einem der ersten nicht-drehenden Verbindungsbeschläge (42) verbunden ist, die lösbar am unteren Kragen (40) befestigt sind, und/oder jeder Steuerstange (6) über eine Kugelgelenkverbindung mit einem der ersten drehenden Verbindungsbeschläge (46) verbunden ist, die lösbar am oberen Kragen (44) befestigt sind.

11. Taumelscheibenvorrichtung nach Anspruch 9 in Verbindung mit Anspruch 2 und Anspruch 10, **dadurch gekennzeichnet, dass** das mindestens eine Rückhalteorgan (16) über eine Kugelgelenkverbindung mit einem zweiten nicht-drehenden Verbindungsbeschlag verbunden ist, der lösbar am unteren Kragen (40) befestigt ist, und/ oder das mindestens eine Antriebsorgan (13) über eine Kugelgelenkverbindung mit einem zweiten drehenden Verbindungsbeschlag (49) verbunden ist, der lösbar am oberen Kragen (44) befestigt ist.

12. Taumelscheibenvorrichtung nach einem der Ansprüche 1 bis 11, **dadurch gekennzeichnet, dass** die Verbindungsbeschläge (42, 46-49) mindestens einer Moduleinheit aus Aluminiumlegierung oder einem Verbundmaterial mit einer Metallmatrix aus Aluminium oder Titan ausgehend von Zwischenformen oder Gesenkschmiedeteilen oder Platten hergestellt werden.

13. Taumelscheibenvorrichtung nach einem der Ansprüche 1 bis 12, **dadurch gekennzeichnet, dass** einer (30') der Ringe des Wälzlagers (21'), der fest mit einer der beiden nicht-drehenden (14') bzw. drehenden Scheiben (12') verbunden ist, die am Mechanismus (11') zur Führung in Translations- und Kippbewegung befestigt ist, in zwei Halbringe (30'a, 30'b) unterteilt ist, die axial aneinander stoßen und je mit einem von zwei benachbarten radialen Kragen (50a, 50b) versehen sind, die axial gegeneinander geklemmt (39) sind, um eine Voreinspannung des Wälzlagers (21') zu gewährleisten, und durch die die Scheibe (14') am Mechanischanismus (11') zur Führung in Translations- und Kippbewegung befestigt ist.

14. Taumelscheibenvorrichtung nach einem der Ansprüche 1 bis 13, **dadurch gekennzeichnet, dass** der Mechanismus (11') zur Führung in Translations- und Kippbewegung ein zentrales Kugelgelenk (18') aufweist, das auf die Achse (Z-Z) des Rotors zentriert ist, und auf das die nicht-drehende Scheibe (14') mittels mindestens eines Gleitschuhs (19') mit einem Auflager in Form einer Kugelkalotte schwenkbar montiert ist, wobei das Kugelgelenk (18') parallel zur Achse (Z-Z) des Rotors um eine zylindrische Führung (20') koaxial zur Achse (Z-Z) des Rotors gleitend und nicht-drehend um die Achse (Z-Z) des Rotors montiert und vorzugsweise bezüglich des Aufbaus (15) des Drehflügel-Flugzeugs ortsfest ist.

15. Taumelscheibenvorrichtung nach einem der Ansprüche 1 bis 13, **dadurch gekennzeichnet, dass** der Mechanismus zur Führung in Translations- und Kippbewegung eine Kardangelenkverbindung aufweist, mit einem Kardanring (51), der einerseits um eine erste diametrale Achse senkrecht zur Achse (Z-Z) des Rotors über zwei koaxiale Schwenkverbindungen (54) auf zwei Schlitten (55), die in axialer Translationsbewegung je auf einer von zwei Führungssäulen geführt werden, die parallel zur Achse (Z-Z) des Rotors liegen und bezüglich der Achse (Z-Z) in der gleichen diametralen Ebene symmetrisch zueinander sind, die durch diese Achse verläuft, und andererseits um eine zweite diametrale Achse senkrecht zur ersten diametralen Achse über zwei Schwenkverbindungen (53) mit koaxialen und einander diametral gegenüberliegenden Drehzapfen (52) schwenkbar montiert ist, die den Kardanring (51) mit derjenigen (14') der beiden nicht-drehenden (14') bzw. drehenden Scheiben (12') verbindet, die mit dem Mechanismus zur Führung und Translations- und Kippbewegung verbunden ist.

## Claims

1. Swashplate device for controlling the pitch of the blades (2) of a rotorcraft rotor (1), such as a main helicopter rotor, on which rotor (1) each blade (2) is, on the one hand, driven in rotation about an axis of rotation (Z-Z) of a shaft (3) of the rotor (1) by means of a hub (4) integral in rotation with the shaft (3), and, on the other hand, integral in rotation, about a longitudinal axis of pitch change (A-A) of the blade (2), with at least one pitch lever (5) controlled by a corresponding pitch connecting rod (6), the said device (10') being of the type comprising two annular and coaxial plates (12', 14') surrounding the axis (Z-Z) of the rotor (1) and mounted on a mechanism (11') for guiding the said plates in axial translation and in tilting with respect to the rotor axis (Z-Z), of which one is a rotating plate (12') connected, on the one hand, to the said hub (4) and/or the said shaft (3) by at least one member (13) for driving the rotating plate (12') in rotation with the rotor (1) about its axis (Z-Z) and, on the one hand, to each blade (2) by the corresponding pitch connecting rod (6), the said rotating plate (12') being mounted by at least one rolling bearing (21') for rotation on the other plate, which is a non-rotating plate (14') connected, on the one hand, to the structure (15) of the said rotorcraft by at least one retaining member (16) immobilising the said non-rotating plate (14') in rotation about the said rotor axis (Z-Z) and, on the other hand, to pilot control members (17) which act on the non-rotating plate (14') in such a way that the axial-translation and/or tilting movements imposed on the non-rotating plate (14') from the pilot controls (17) are followed by the rotating plate (12'), which transmits the pitch to be imparted to the blades (2) of the rotor (1) by means of the pitch connecting rods (6), the said rotating plate (12') comprising a modular set of connecting fittings (46) fixed rigidly (45) and removably to an annular member (31') to establish the connections between this rotating plate and the pitch connecting rods (6) and/or the said at least one driving member (13),
**characterised in that** the said non-rotating plate (14') comprises a modular set of connecting fittings (42) fixed rigidly (41) and removably to an annular member (30') to establish the connections between this non-rotating plate and the pilot control members (17) and/or the said at least one retaining member (16).

2. Swashplate device according to Claim 1,
**characterised in that** the said modular set of connecting fittings of the said non-rotating plate (14') comprises first non-rotating connecting fittings (42) which are identical to one another and equal in number to the said pilot control members (17), and each of which connects the said non-rotating plate (14') to respectively one of the said pilot control members (17), and/or the said modular set of connecting fittings of the said rotating plate (12') comprises first rotating connecting fittings (46) which are identical to one another and equal in number to the said pitch connecting rods (6), and each of which connects the said rotating plate (12') to respectively one of the said pitch connecting rods (6).

3. Swashplate device according to Claim 2,
**characterised in that** the said modular set of connecting fittings of the said non-rotating plate (14') comprises at least one second non-rotating connecting fitting, equal in number to the said at least one retaining member (16), to connect the said non-rotating plate (14') to the said at least one retaining member (16), and/or the said modular set of connecting fittings of the said rotating plate (12') comprises at least one second rotating connecting fitting (49), equal in number to the said at least one driving member (13), to connect the said rotating plate (12') to the said at least one driving member (13).

4. Swashplate device according to any one of Claims 1 to 3,
**characterised in that** the said annular member of at least one of the plates (14', 12') is formed by respectively one of the inner (30') and outer (31') races of the rolling bearing (21') for rotary mounting of the rotating plate (12') on the non-rotating plate (14).

5. Swashplate device according to any one of Claims 1 to 4,
**characterised in that** the said annular member of at least one plate (12', 14') is an intermediate ring coupled to one of the inner (30') and outer (31') races of the said rolling bearing (21').

6. Swashplate device according to any one of Claims 1 to 5,
**characterised in that** the connecting fittings (42, 46-49) of a same plate (14', 12') are fixed to the said annular member (30', 31') of the said plate by means of a collar (40, 44) which is integral with the said annular member (30', 31') and to which the said connecting fittings (42, 46-49) are each removably attached.

7. Swashplate device according to Claim 6,
**characterised in that** each connecting fitting (42, 46-49) of a modular set is attached to the corresponding collar (40, 44) by bolting (41, 45).

8. Swashplate device according to any one of Claims 1 to 7,
**characterised in that** each connecting fitting (42, 46-49) has a substantially triangular shape in plane view, with one side forming a concave circular arc constructed as a base for fixing to part of the periphery of the said corresponding annular member or the said corresponding collar (40, 44), the vertex opposite the said concave side being constructed as a clevis (43, 47) or an end-fitting for accommodating an end pivot of a pitch connecting rod (6) or a pilot control member (17) or driving member (13) or retaining member (16) corresponding to it.

9. Swashplate device according to any one of Claims 6, 7 and 8, as related to one of Claims 6 and 7,
**characterised in that** the race (31') of the rolling bearing (21') which is connected in rotation to the rotating plate (12') is integral with an upper collar (44) protruding substantially radially outwards from the rolling bearing (21') from the upper axial end of the said race (31') connected to the rotating plate (12') and with respect to the rotor axis (Z-Z), whereas the other race (30') of the rolling bearing (21') which is connected to the non-rotating plate (14') is integral with a lower collar (40) protruding substantially radially outwards from the rolling bearing (21') from the lower axial end of the said other race (30') connected to the non-rotating plate (14').

10. Swashplate device according to Claim 9 as related to Claim 2,
**characterised in that** each pilot control member (17) is connected by a pivoted connection to respectively one of the said first non-rotating connecting fittings (42) fixed removably to the said lower collar (40), and/or each pitch connecting rod (6) is connected by a pivoted connection to respectively one of the said first rotating connecting fittings (46) fixed removably to the said upper collar (44).

11. Swashplate device according to one of Claims 9, as related to Claim 2, and 10,
**characterised in that** the said at least one retaining member (16) is connected by a pivoted connection to a respective second non-rotating connecting fitting fixed removably to the said lower collar (40), and/or the said at least one driving member (13) is connected by a pivoted connection to a respective second rotating connecting fitting (49) fixed removably to the said upper collar (44).

12. Swashplate device according to any one of Claims 1 to 11,
**characterised in that** the connecting fittings (42, 46-49) of at least one modular set are made of aluminium alloy or of a composite material having an aluminium or titanium metal matrix, from forged or drop-forged blanks or from plates.

13. Swashplate device according to any one of Claims 1 to 12,
**characterised in that** one (30') of the races of the rolling bearing (21'), integral with one of the two non-rotating (14') and rotating (12') plates which is fixed to the said mechanism (11') for guiding in translation and tilting, is subdivided into two half-races (30'a, 30'b) axially end to end, each of which is provided with respectively one of two adjacent radial collars (50a, 50b), which are clamped (39) axially against one another to ensure prestressing of the rolling bearing (21') and by which the said plate (14') is fixed to the said mechanism (11') for guiding in translation and tilting.

14. Device according to any one of Claims 1 to 13,
**characterised in that** the said mechanism (11') for guiding in translation and tilting comprises a central swivel (18'), which is centred on the rotor axis (Z-Z) and on which the non-rotating plate (14') is mounted to oscillate by at least one shoe (19') with a spherical cap bearing surface, the said swivel (18') being mounted to slide parallel to the rotor axis (Z-Z) about a cylindrical guide (20') coaxial with the rotor axis (Z-Z) and not rotating about the said rotor axis (Z-Z) and preferably fixed with respect to the structure (15) of the rotorcraft.

15. Device according to any one of Claims 1 to 13,
**characterised in that** the said mechanism for guiding in translation and tilting comprises a cardan joint connection, with a cardan ring (51) mounted to pivot, on the one hand, about a first diametrical axis, perpendicular to the rotor axis (Z-Z), by two coaxial pivoting connections (54) on two slides (55) each guided in axial translation on respectively one of two guiding columns parallel to the rotor axis (Z-Z) and symmetrical to one another with respect to the said axis (Z-Z) in a same diametrical plane passing through the latter, and, on the other hand, about a second diametrical axis, perpendicular to the first diametrical axis, by two pivoting connections (53) with coaxial and diametrically opposed trunnions (52), connecting the cardan ring (51) to that (14') of the two non-rotating (14') and rotating (12') plates which is connected to the said mechanism for guiding in translation and tilting.
